# EUROPEAN PATENT APPLICATION

(11) **EP 4 412 323 A1**
(43) Date of publication of application: **07.08.2024**
(21) Application number: 24154058.2
(22) Date of filing: 26.01.2024
(51) Int. Cl.: H04W 52/32, H04B 7/02, H04L 5/00, H04W 52/42

(54) **METHOD AND APPARATUS OF BEAM MANAGEMENT FOR CHANGING TRANSMISSION POWER**

(30) Priority: 31.01.2023 KR 20230012841; 06.12.2023 KR 20230175378
(71) Applicant: KT Corporation, Seongnam-si, Gyeonggi-do 13606 (KR)
(72) Inventor: PARK, KI-HYEON, 13606 Seongnam-si, Gyeonggi-do (KR)
(74) Representative: BCKIP Part mbB

(57) **Abstract**

Disclosed are transceiving methods and apparatuses in a wireless communication system. In other words, a UE receives configuration information for a plurality of channel state information-reference signals (CSI-RS) from a base station. In addition, the UE obtains a transmission power change for a downlink signal, based on the configuration information for the plurality of CSI-RSs received from the base station. Here, there are proposed a method and apparatus for configuring a transmission power offset for each of the plurality of CSI-RSs.

## Description

### CROSS-REFERENCE TO RELATED THE APPLICATION

This application is based on and claims priority to Patent Applications No. 10-2023-0012841 filed on Jan. 31, 2023 and No. 10-2023-0175378 filed on Dec. 6, 2023 in the Korean Intellectual Property Office.

### BACKGROUND

### Technical Field

The disclosure relates to a 5^{th} generation new radio (5G NR) system based on a 3^{rd} generation partnership project.

### Description of the Related Art

As more communication devices require greater communication traffic, necessity for a next generation 5G system corresponding to mobile broadband communication, which is enhanced compared to a legacy LTE system, is emerging. In the next generation 5G system, scenarios can be classified into Enhanced Mobile BroadBand (eMBB), Ultra-reliability and low-latency communication (URLLC), Massive Machine-Type Communications (mMTC), and the like.

Here, the eMBB corresponds to a next generation mobile communication scenario having such a characteristic as high spectrum efficiency, high user experienced data rate, high peak data rate, and the like, the URLLC corresponds to a next generation mobile communication scenario having such a characteristic as ultra-reliable, ultra-low latency, ultra-high availability, and the like (e.g., V2X, Emergency Service, Remote Control), and the mMTC corresponds to a next generation mobile communication scenario having such a characteristic as low cost, low energy, short packet, and massive connectivity (e.g., IoT).

### SUMMARY

An aspect of the disclosure is to provide a method of configuring and managing beam resources in a wireless communication system. In particular, an aspect of the disclosure is to provide a method of configuring and managing beam resources to control transmission power for network power reduction.

According to an embodiment of the disclosure, a UE in a wireless communication system receives configuration information for a plurality of channel state information-reference signals (CSI-RS) from a base station. Further, the UE obtains transmission power change for a downlink signal, based on the configuration information for the plurality of CSI-RSs received from the base station. Here, a method of configuring a transmission power offset for each of the plurality of CSI-RSs is provided.

Further, according to an embodiment of the disclosure, a base station in a wireless communication system determines a transmission power change for a downlink signal. In addition, the base station transmits configuration information for a plurality of channel state information-reference signals (CSI-RS) to a UE after determining the transmission power change. Here, a method of configuring a transmission power offset for each of the plurality of CSI-RSs is provided.

Further, according to an embodiment of the disclosure, a communication apparatus in a wireless communication system includes at least one processor, and at least one memory configured to store instructions and be operably electrically connectable to the at least one processor, wherein an operation performed based on the instruction executed by the at least one processor includes: receiving configuration information for a plurality of channel state information-reference signals (CSI-RS) from a base station. In addition, a transmission power change for a downlink signal is obtained based on the configuration information for the plurality of CSI-RSs received from the base station. Here, the communication apparatus for configuring a transmission power offset for each of the plurality of CSI-RSs is provided.

Further, according to an embodiment of the disclosure, a communication apparatus in a wireless communication system includes at least one processor, and at least one memory configured to store instructions and be operably electrically connectable to the at least one processor, wherein an operation performed based on the instruction executed by the at least one processor includes: determining a transmission power change for a downlink signal. In addition, configuration information for a plurality of channel state information-reference signals (CSI-RS) is transmitted to a UE after determining the transmission power change. Here, a base station for configuring a transmission power offset for each of the plurality of CSI-RSs is provided.

The configuration information for the plurality of CSI-RSs may be single CSI-RS resource configuration information, and a quasi co-location (QCL) relationship may be configured for each of the plurality of CSI-RSs.

Each of the plurality of CSI-RSs may correspond to an identity (ID) associated with a CSI-RS resource, and the transmission power offset may be configured based on the ID.

Meanwhile, the UE (or the communication apparatus) may receive at least one CSI-RS from the base station, and perform CSI feedback based on the at least one received CSI-RS. The base station may transmit the at least one CSI-RS to the UE, and then receive CSI feedback from the UE.

The information for the plurality of CSI-RSs may be transmitted from the base station to the UE through a radio resource control (RRC) message, and the UE may receive this information.

### BRIEF DESCRIPTION OF THE DRAWINGS

FIG. 1 illustrates a wireless communication system.
FIG. 2 illustrates a structure of a radio frame used in new radio (NR).
FIGS. 3A to 3C illustrate exemplary architectures for a wireless communication service.
FIG. 4 illustrates a slot structure of a NR frame.
FIG. 5 shows an example of a subframe type in NR.
FIG. 6 illustrates a structure of a self-contained slot.
FIGS. 7A to 7C illustrate the structure of a synchronization signal block (SSB) in NR.
FIG. 8 illustrates SSB transmission in NR.
FIG. 9 illustrates beam sweeping in NR.
FIG. 10 illustrates channel state information (CSI) related procedure.
FIG. 11 illustrates a transmission power management scheme based on beams according to the disclosure.
FIG. 12 illustrates an operation method of a UE according to an embodiment of the disclosure.
FIG. 13 illustrates an operation method of a base station according to an embodiment of the disclosure.
FIG. 14 shows apparatuses according to an embodiment of the disclosure.
FIG. 15 is a block diagram showing a configuration of a UE according to an embodiment of the disclosure.
FIG. 16 is a configuration block diagram of a processor in which the disclosure is implemented.
FIG. 17 is a detailed block diagram of a transceiver of a first apparatus shown in FIG. 14 or a transceiving unit of an apparatus shown in FIG. 15.

### DETAILED DESCRIPTION

The technical terms used herein are used to merely describe specific embodiments and should not be construed as limiting the disclosure. Further, the technical terms used herein should be, unless defined otherwise, interpreted as having meanings generally understood by those skilled in the art but not too broadly or too narrowly. Further, the technical terms used herein, which are determined not to exactly represent the spirit of the disclosure, should be replaced by or understood by such technical terms as being able to be exactly understood by those skilled in the art. Further, the general terms used herein should be interpreted in the context as defined in the dictionary, but not in an excessively narrowed manner.

The expression of the singular number in the disclosure includes the meaning of the plural number unless the meaning of the singular number is definitely different from that of the plural number in the context. In the following description, the term 'include' or 'have' may represent the existence of a feature, a number, a step, an operation, a component, a part or the combination thereof described in the disclosure, and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without departing from the scope of the disclosure.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the disclosure will be described in greater detail with reference to the accompanying drawings. In describing the disclosure, for ease of understanding, the same reference numerals are used to denote the same components throughout the drawings, and repetitive description on the same components will be omitted. Detailed description on well-known arts which are determined to make the gist of the disclosure unclear will be omitted. The accompanying drawings are provided to merely make the spirit of the disclosure readily understood, but not should be intended to be limiting of the disclosure. It should be understood that the spirit of the disclosure may be expanded to its modifications, replacements or equivalents in addition to what is shown in the drawings.

In the disclosure, "A or B" may mean "only A", "only B", or "both A and B". In other words, "A or B" in the disclosure may be interpreted as "A and/or B". For example, "A, B or C" in the disclosure may mean "only A", "only B", "only C", or "any combination of A, B and C".

In the disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the disclosure, "at least one of A and B" may mean "only A", "only B" or "both A and B". In addition, the expression "at least one of A or B" or "at least one of A and/or B" in the disclosure may be interpreted as the same as "at least one of A and B".

In addition, in the disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the disclosure may mean "for example". In detail, when it is shown as "control information (PDCCH)", "physical downlink control channel (PDCCH)" may be proposed as an example of "control information". In other words, "control information" in the disclosure is not limited to "PDCCH", and "PDDCH" may be proposed as an example of "control information". In addition, even when shown as "control information (i.e., PDCCH)", "PDCCH" may be proposed as an example of "control information".

The technical features individually described in one drawing in this specification may be implemented separately or at the same time.

In the accompanying drawings, user equipment (UE) is illustrated by way of example, but the illustrated UE may be referred to as a terminal, mobile equipment (ME), and the like. In addition, the UE may be a portable device such as a laptop computer, a mobile phone, a PDA, a smart phone, a multimedia device, or the like, or may be a non-portable device such as a PC or a vehicle-mounted device.

Hereinafter, the UE is used as an example of a device capable of wireless communication (eg, a wireless communication device, a wireless device, or a wireless apparatus). The operation performed by the UE may be performed by any device capable of wireless communication. A device capable of wireless communication may also be referred to as a radio communication device, a wireless device, or a wireless apparatus.

A base station, a term used below, generally refers to a fixed station that communicates with a wireless device, and may be used to cover the meanings of terms including an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), the repeater(relay), and so on.

Although embodiments of the disclosure will be described based on an LTE system, an LTE-advanced (LTE-A) system, and an NR system, such embodiments may be applied to any communication system corresponding to the aforementioned definition.

### <Wireless Communication System>

With the success of long term evolution (LTE)/LTE-A (LTE-Advanced) for the 4th generation mobile communication, the next generation, i.e., 5^{th} generation (so called 5G) mobile communication has been commercialized and the follow-up studies are also ongoing.

The 5^{th} generation mobile communications defined by the International Telecommunication Union (ITU) refers to communication providing a data transmission rate of up to 20 Gbps and an actual minimum transmission rate of at least 100 Mbps anywhere. The official name of the 5^{th} generation mobile telecommunications is 'IMT-2020.'

The ITU proposes three usage scenarios, for example, enhanced Mobile Broadband (eMBB), massive Machine Type Communication (mMTC) and Ultra Reliable and Low Latency Communications (URLLC).

The URLLC relates to a usage scenario requiring high reliability and low latency. For example, services such as automatic driving, factory automation, augmented reality require high reliability and low latency (e.g., a delay time of less than 1 ms). The delay time of current 4G (LTE) is statistically 21 to 43 ms (best 10%) and 33 to 75 ms (median). This is insufficient to support a service requiring a delay time of 1 ms or less. Next, the eMBB usage scenario relates to a usage scenario requiring mobile ultra-wideband.

That is, the 5G mobile communication system supports higher capacity than the current 4G LTE, and may increase the density of mobile broadband users and support device to device (D2D), high stability, and machine type communication (MTC). The 5G research and development also aims at a lower latency time and lower battery consumption than a 4G mobile communication system to better implement the Internet of things. A new radio access technology (new RAT or NR) may be proposed for such 5G mobile communication.

An NR frequency band is defined as frequency ranges of two types FR1 and FR2. The numerical value in each frequency range may be changed, and the frequency ranges of the two types FR1 and FR2 may for example be shown in Table 1 below. For convenience of description, the FR1 between the frequency ranges used in the NR system may refer to a Sub-6 GHz range, and the FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values in the frequency range may be changed in the NR system. For example, FR1 may range from 410 MHz to 7125 MHz as listed in [Table 1]. That is, FR1 may include a frequency band of 6 GHz (or 5850, 5900, and 5925 MHz) or above. For example, the frequency band of 6 GHz (or 5850, 5900, and 5925 MHz) or above may include an unlicensed band. The unlicensed band may be used for various purposes, for example, vehicle communication (e.g., autonomous driving).

Meanwhile, the 3GPP communication standards define downlink (DL) physical channels corresponding to resource elements (REs) carrying information originated from a higher layer, and DL physical signals which are used in the physical layer and correspond to REs which do not carry information originated from a higher layer. For example, physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH) are defined as DL physical channels, and reference signals (RSs) and synchronization signals (SSs) are defined as DL physical signals. An RS, also called a pilot signal, is a signal with a predefined special waveform known to both a gNode B (gNB) and a UE. For example, cell specific RS, UE-specific RS (UE-RS), positioning RS (PRS), and channel state information RS (CSI-RS) are defined as DL RSs. The 3GPP LTE/LTE-A standards define uplink (UL) physical channels corresponding to REs carrying information originated from a higher layer, and UL physical signals which are used in the physical layer and correspond to REs which do not carry information originated from a higher layer. For example, physical uplink shared channel (PUSCH), physical uplink control channel (PUCCH), and physical random access channel (PRACH) are defined as UL physical channels, and a demodulation reference signal (DMRS) for a UL control/data signal, and a sounding reference signal (SRS) used for UL channel measurement are defined as UL physical signals.

In the disclosure, the PDCCH/PCFICH/PHICH/PDSCH refers to a set of time-frequency resources or a set of REs, which carry downlink control information (DCI)/a control format indicator (CFI)/a DL acknowledgement/negative acknowledgement (ACK/NACK)/DL data. Further, the PUCCH/PUSCH/PRACH refers to a set of time-frequency resources or a set of REs, which carry UL control information (UCI)/UL data/a random access signal.

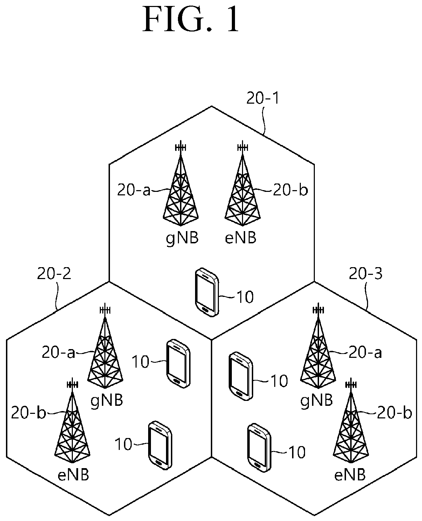

**FIG. 1** **illustrates a wireless communication system.**

As can be seen with reference to FIG. 1, the wireless communication system includes at least one base station (BS). The BS is divided into a gNodeB (or gNB) 20a and an eNodeB (or eNB) 20b. The gNB 20a supports the 5G mobile communication. The eNB 20b supports the 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A UE typically belongs to one cell, and the cell to which the UE belongs is called a serving cell. A base station providing a communication service to a serving cell is referred to as a serving base station (serving BS). Since the wireless communication system is a cellular system, other cells adjacent to the serving cell exist. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, the transmitter may be a part of the base station 20, and the receiver may be a part of the UE 10. In the uplink, the transmitter may be a part of the UE 10, and the receiver may be a part of the base station 20.

Meanwhile, a wireless communication system may be largely divided into a frequency division duplex (FDD) scheme and a time division duplex (TDD) scheme. According to the FDD scheme, uplink transmission and downlink transmission are performed while occupying different frequency bands. According to the TDD scheme, uplink transmission and downlink transmission are performed at different times while occupying the same frequency band. The channel response of the TDD scheme is substantially reciprocal. This means that the downlink channel response and the uplink channel response are almost the same in a given frequency domain. Accordingly, in the TDD-based radio communication system, there is an advantage that the downlink channel response can be obtained from the uplink channel response. In the TDD scheme, since uplink transmission and downlink transmission are time-divided in the entire frequency band, downlink transmission by the base station and uplink transmission by the UE cannot be simultaneously performed. In a TDD system in which uplink transmission and downlink transmission are divided in subframe units, uplink transmission and downlink transmission are performed in different subframes.

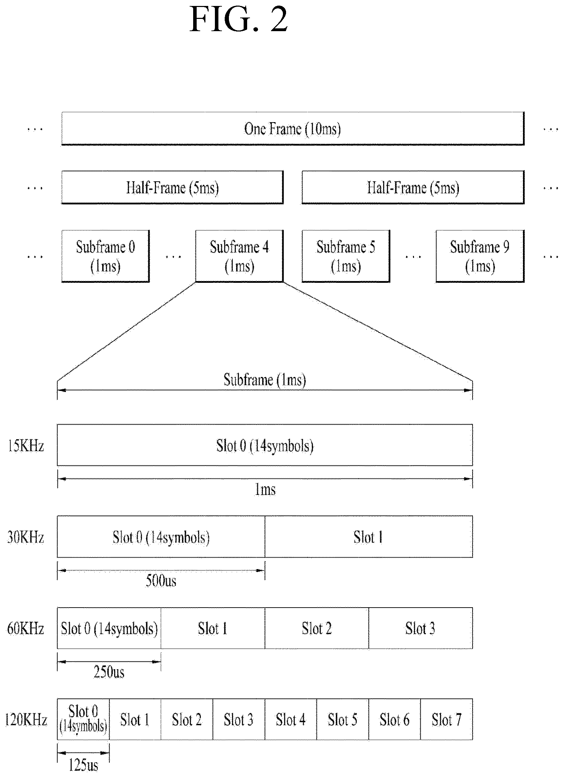

**FIG. 2** **illustrates a structure of a radio frame used in NR.**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on an SCS. Each slot includes 12 or 14 OFDM (A) symbols according to a CP. When a normal CP is used, each slot includes 14 OFDM symbols. When an extended CP is used, each slot includes 12 OFDM symbols. A symbol may include an OFDM symbol (CP-OFDM symbol) and an SC-FDMA symbol (or DFT-s-OFDM symbol).

### <Support of Various Numerologies>

With the development of wireless communication technology, a plurality of numerologies may be provided to UEs in the NR system. For example, in the case where a subcarrier spacing (SCS) is 15 kHz, a wide area of the conventional cellular bands is supported, and, in the case where an SCS is 30 kHz/60 kHz, a dense-urban, lower latency, wider carrier bandwidth is supported. In the case where the SCS is 60 kHz or higher, a bandwidth that is greater than 24.25 GHz is supported in order to overcome phase noise.

The numerologies may be defined by a cyclic prefix (CP) length and a SCS. One cell can provide a plurality of numerologies to UEs. When an index of a numerology is represented by µ, a subcarrier spacing and a corresponding CP length may be expressed as shown in the following table.

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

In the case of a normal CP, when an index of a numerology is expressed by µ, the number of OLDM symbols per slot N^{slot}_{symb}, the number of slots per frame N^{frame,µ}ₛₗₒₜ, and the number of slots per subframe N^{subframe,µ}ₛₗₒₜ are expressed as shown in the following table.

**[Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

In the case of an extended CP, when an index of a numerology is represented by µ, the number of OLDM symbols per slot N^{slot}_{symb}, the number of slots per frame N^{frame,µ}ₛₗₒₜ, and the number of slots per subframe N^{subframe,µ}ₛₗₒₜ are expressed as shown in the following table.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

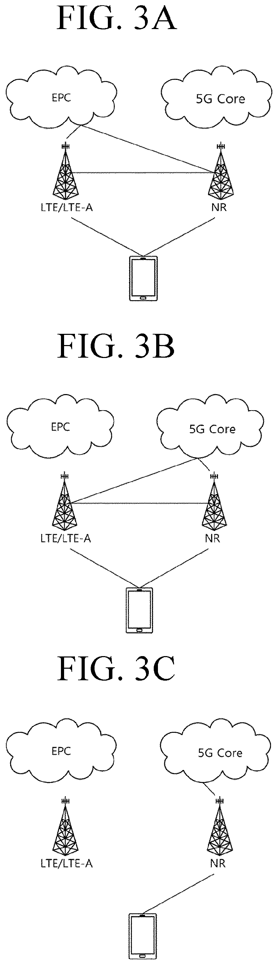

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, an Evolved Packet core (EPC).

Referring to FIG. 3B, the LTE/LTE-A cell is connected with a core network for 5th generation mobile communication, that is, a 5G core network, unlike the example in FIG. 3A.

A service based on the architecture shown in FIGS. 3A and 3B is referred to as a non-standalone (NSA) service.

Referring to FIG. 3C, a UE is connected only with an NR cell. A service based on this architecture is referred to as a standalone (SA) service.

Meanwhile, in the above new radio access technology (NR), using a downlink subframe for reception from a base station and using an uplink subframe for transmission to the base station may be considered. This method may be applied to paired spectrums and not-paired spectrums. A pair of spectrums indicates including two subcarriers for downlink and uplink operations. For example, one subcarrier in one pair of spectrums may include a pair of a downlink band and an uplink band.

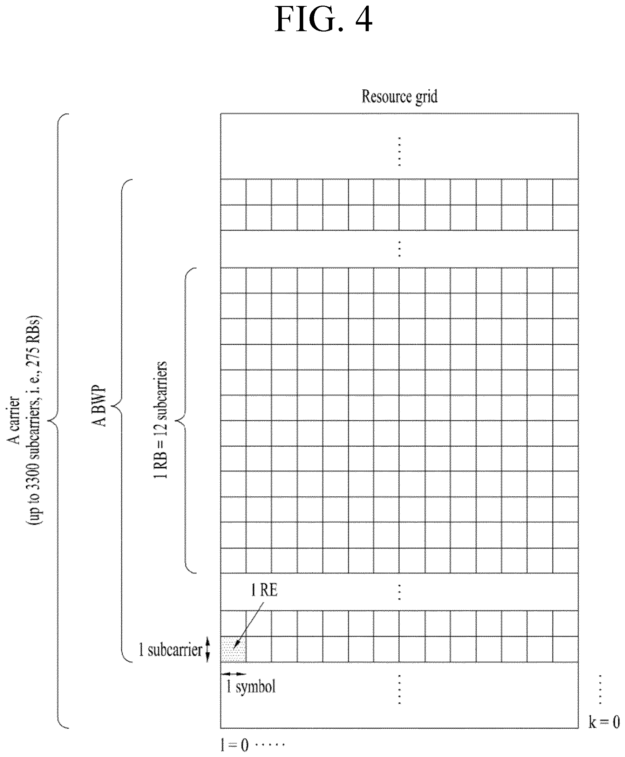

**FIG. 4** **illustrates a slot structure of an NR frame.**

A slot includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) is defined as a plurality of consecutive physical (P)RBs in the frequency domain and may correspond to one numerology (e.g., SCS, CP length, etc.). A UE may be configured with up to N (e.g., five) BWPs in each of the downlink and the uplink. The downlink or uplink transmission is performed through an activated BWP, and only one BWP among the BWPs configured for the UE may be activated at a given time. In the resource grid, each element is referred to as a resource element (RE), and one complex symbol may be mapped thereto.

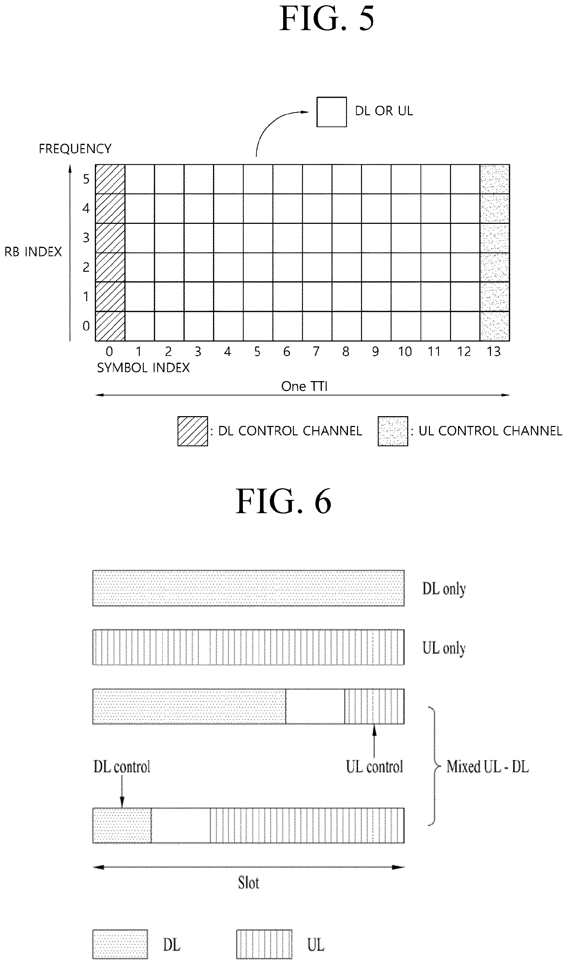

**FIG. 5** **shows an example of a subframe type in NR.**

A TTI (Transmission Time Interval) shown in FIG. 5 may be called a subframe or a slot for NR (or new RAT). The subframe (or slot) shown in FIG. 5 can be used in a TDD system of NR (or new RAT) in order to minimize data transmission delay. As shown in FIG. 5, a subframe (or slot) includes 14 symbols. The symbol at the head of the subframe (or slot) can be used for a DL control channel and the symbol at the end of the subframe (or slot) can be used for a UL control channel. The remaining symbols can be used for DL data transmission or UL data transmission. According to this subframe (or slot) structure, downlink transmission and uplink transmission can be sequentially performed in one subframe (or slot). Accordingly, downlink data can be received in a subframe (or slot) and uplink ACK/NACL may be transmitted in the subframe (or slot).

Such a subframe (or slot) structure may be called a self-contained subframe (or slot).

Specifically, the first N symbols (hereinafter referred to as a DL control region) in a slot may be used to transmit a DL control channel, and the last M symbols (hereinafter referred to as a UL control region) in the slot may be used to transmit a UL control channel. N and M are integers greater than 0. A resource area between the DL control region and the UL control region (hereinafter referred to as a data region) may be used for DL data transmission or UL data transmission. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

When this subframe (or slot) structure is used, a time taken to retransmit data that has failed in reception can be reduced to minimize final data transmission latency. In such a self-contained subframe (or slot) structure, a time gap may be required in a process of transition from a transmission mode to a reception mode or from the reception mode to the transmission mode. To this end, some OFDM symbols when DL switches to UL in the subframe structure can be configured to a guard period (GP).

**FIG. 6** **illustrates a structure of a self-contained slot.**

In the NR system, the frame has a self-contained structure, in which all of a DL control channel, DL or UL data channel, UL control channel, and so on are included in one slot. For example, the first N symbols (hereinafter referred to as a DL control region) in a slot may be used for transmitting a DL control channel, and the last M symbols (hereinafter referred to as an UL control region) in the slot may be used for transmitting an UL control channel. N and M are integers greater than 0. A resource area between the DL control region and the UL control region (hereinafter referred to as a data region) may be used for DL data transmission or UL data transmission.

For example, the following configurations may be taken into account. The durations are listed in temporal order.
1. DL only configuration
2. UL only configuration
3. Mixed UL-DL configuration
   - DL region + Guard Period (GP) + UL control region
   - DL control region + GP + UL region

DL region: (i) DL data region, (ii) DL control region + DL data region
UL region: (i) UL data region, (ii) UL data region + UL control region

A PDCCH may be transmitted in the DL control region, and a PDSCH may be transmitted in the DL data region. A PUCCH may be transmitted in the UL control region, and a PUSCH may be transmitted in the UL data region. In the PDCCH, Downlink Control Information (DCI), for example, DL data scheduling information or UL data scheduling data may be transmitted. In the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A GP provides a time gap during a process where a gNB and a UE transition from the transmission mode to the reception mode or a process where the gNB and UE transition from the reception mode to the transmission mode. Part of symbols belonging to the occasion in which the mode is changed from DL to UL within a subframe may be configured as the GP.

### <CSI-RS>

A CSI-RS is a channel state information (CSI)-reference signal. The CSI-RS is a reference signal that is used when the UE reports CSI feedback to a related serving cell.

The CSI-RS may be composed of a combination of one or more CSI-RS configurations. A zero-power CSI-RS and a non-zero-power CSI-RS are defined.

For the non-zero-power CSI-RS, the sequence is generated according to clause 7.4.1.5.2 of 3GPP TS 38.211, and mapped to resource elements according to clause 7.4.1.5.3.

For the zero-power CSI-RS, the UE estimates that the resource elements defined in clause 7.4.1.5.3 of 3GPP TS 38.211 are not used for PDSCH transmission, and does not perform any estimation on downlink transmission of the resource elements.

### - CSI-RS locations in a slot

1) Frequency location: The starting subcarrier of a component RE pattern is as follows.
   - For 1 port CSI-RS, no limitation.
   - For Y=2, limited to one of even number of subcarriers.
   - For Y=4, limited to one of subcarrier 0, 4, and 8.
   where, Y is the gap of the starting subcarrier.
2) Time location: transmitted from 5, 6, 7, 8, 9, 10, 12, and 13 OFDM symbols.

### - Cycle

The following CSI-RS transmission cycle is supported in NR.

{5, 10, 20, 40, 80, 160, 320, 640} slots

### <Synchronization signal block (SSB) in NR>

In 5G NR, an SS block (SS/PBCH Block: SSB) includes information required for a UE to perform an initial access, i.e., physical broadcast channel (PBCH) including a master information block (MIB) and a synchronization signal (SS) (including PSS and SSS) .

In addition, a plurality of SSB may be grouped and defined as an SS burst, and a plurality of SS bursts may be grouped and defined as an SS burst set. It is assumed that each SSB is beamformed in a particular direction, and various SS blocks in the SS burst set are designed to support UEs present in different directions.

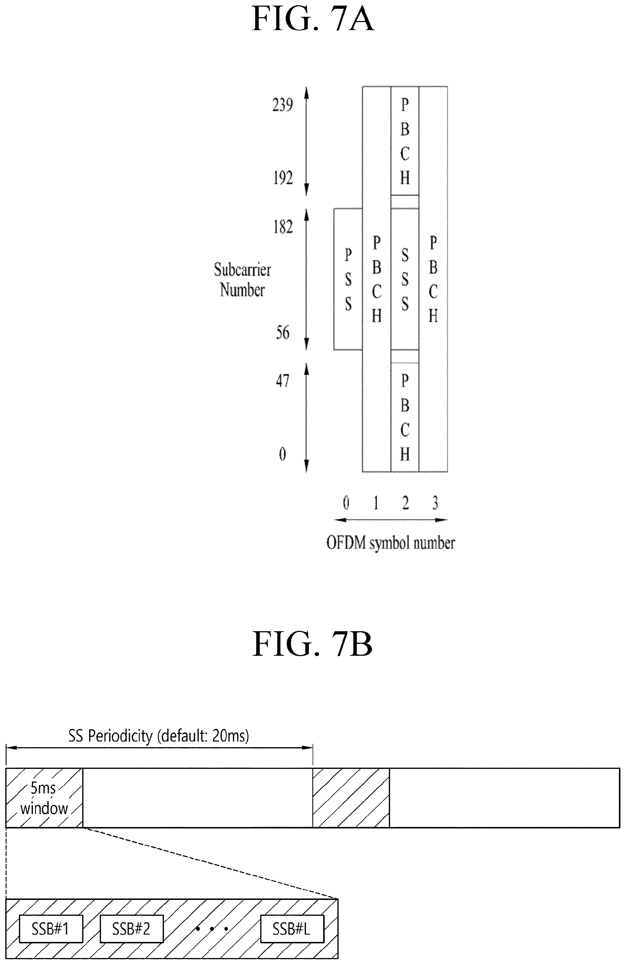

**FIGS. 7A to 7C** **illustrate the structure of a synchronization signal block (SSB) in NR.**

A UE may perform cell search, system information acquisition, beam alignment for initial access, and DL measurement, etc. based on an SSB. The SSB may be used interchangeably with synchronization signal/physical broadcast channel (SS/PBCH).

Referring to FIG. 7A, the SSB includes a primary synchronization signal (PSS), a secondary synchronization signal (SSS), and a physical broadcast channel (PBCH). The SSB is configured in four consecutive orthogonal frequency division multiplexing (OFDM) symbols, and the PSS, the PBCH, the SSS/PBCH and the PBCH are transmitted in the respective OFDM symbols. Each of the PSS and the SSS includes one OFDM symbol and 127 subcarriers, and the PBCH includes three OFDM symbols and 576 subcarriers. Polar coding and quadrature phase shift keying (QPSK) are applied to the PBCH. The PBCH includes data REs and demodulation reference signal (DMRS) REs in every OFDM symbol. There are three DMRS REs per RB, with three data REs between every two adjacent DMRS REs.

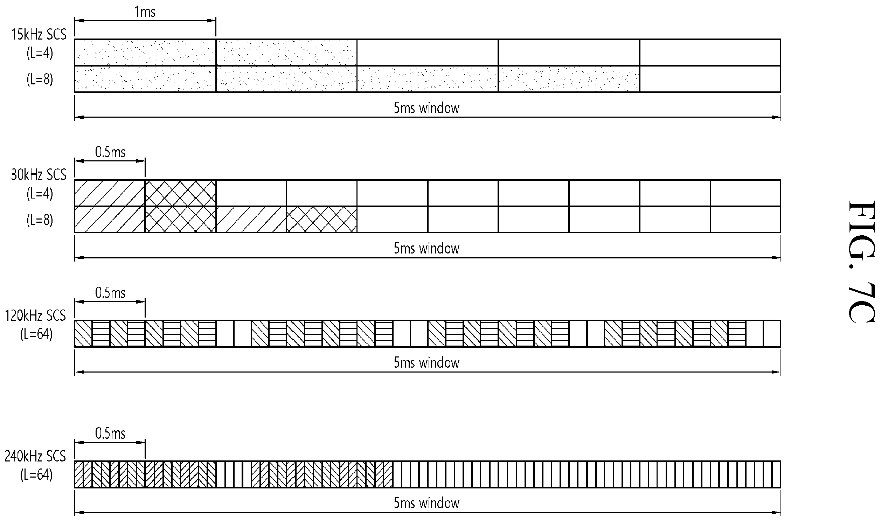

Referring to FIGS. 7B and 7C, the SSB in the SS burst may be transmitted within a window with a length of 5 ms regardless of the cycle of the SS burst set. The candidate number of SSBs that can be positioned in the 5 ms window may be L.

For various frequency bands, the maximum number L of SSBs in the SS burst set may be as the following examples (for reference, the minimum number of SSBs in each SS burst set is assumed as 1 to define performance requirement).
- frequency band less than 3 GHz: L=4
- frequency band of 3 GHz to 6 GHZ: L=8
- frequency band of 6 GHz to 52.6 GHz: L=64

Further, as shown in FIG. 7B, an SSB cycle may be 20 ms. Specifically, a default value for initial cell selection may be 20 ms. In addition, the SSB cycle in RRC CONNECTED/RRC IDLE and NSA may for example be one of {5,10,20,40,80,160} ms.

FIG. 7C shows the SSB configuration in the 5 ms window. Referring to FIG. 7C, the examples of SSB according to L in subcarrier spacing (SCS) and each SCS are shown. In FIG. 7C, two SSBs may be positioned in each patterned area. For example, when L=4 in 15 kHz SCS, two SSBs are positioned in each of two patterned areas, so that a total of 4 SSBs can be transmitted within the 5 ms window. As another example, when L=64 in 240 kHZ SCS, SSBs are respectively positioned in 32 patterned areas, so that a total of 64 SSBs can be transmitted within the 5 ms window.

In a time domain of the time-frequency structure of an SS/PBCH block, the SSB may be composed of 4 OFDM symbols, and the 4 OFDM symbols may be numbered from 0 to 3 in ascending order in the SSB. In the SSB, PSS, SSS and PBCH (related to DM-RS) may use OFDM symbols.

In a frequency domain, the SSB may include 240 consecutive subcarriers. Here, the subcarriers may be numbered from 0 to 239 in the SSB. K is a frequency index, l is assumed as a time index, and k and l may be defined in one SSB.

The UE may estimate that an SSB transmitted with the same block index is quasi co-located (QCL) for Doppler spread, Doppler shift, average gain, average delay, and spatial Rx parameters. The UE may not estimate that it is not QLC for other SSB transmission.

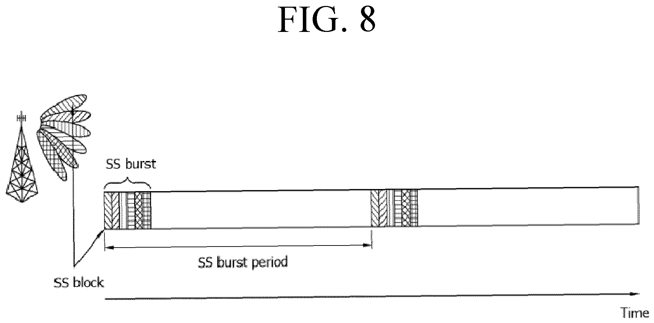

**FIG. 8** **illustrates SSB transmission in NR.**

Referring to FIG. 8, an SS burst is transmitted in every predetermined periodicity. Accordingly, a UE receives SSBs, and performs cell detection and measurement.

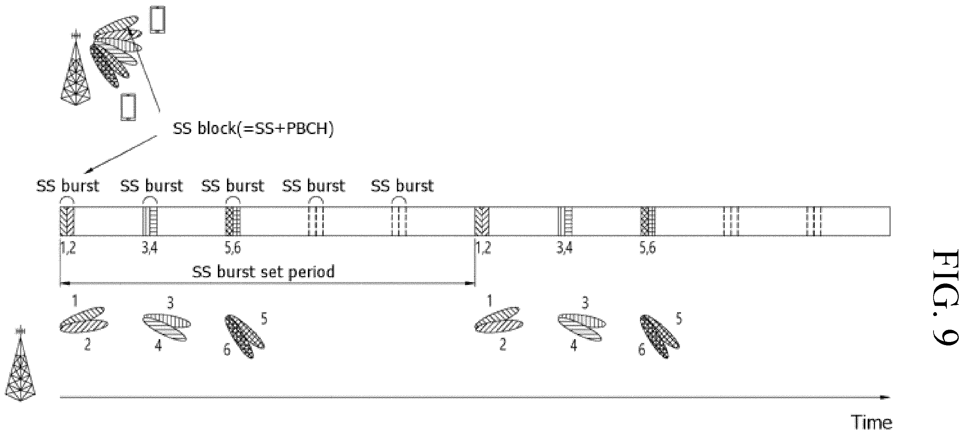

Meanwhile, in the 5G NR, beam sweeping is performed on the SSB. In this regard, descriptions will be made with reference to FIG. 9.

**FIG. 9** **illustrates beam sweeping in NR.**

A base station transmits each SSB in an SS burst over time while performing beam sweeping. In this case, multiple SSBs in an SS burst set are transmitted to support UEs present in different directions. In FIG. 9, the SS burst set includes one to six SSBs, and each SS burst includes two SSBs.

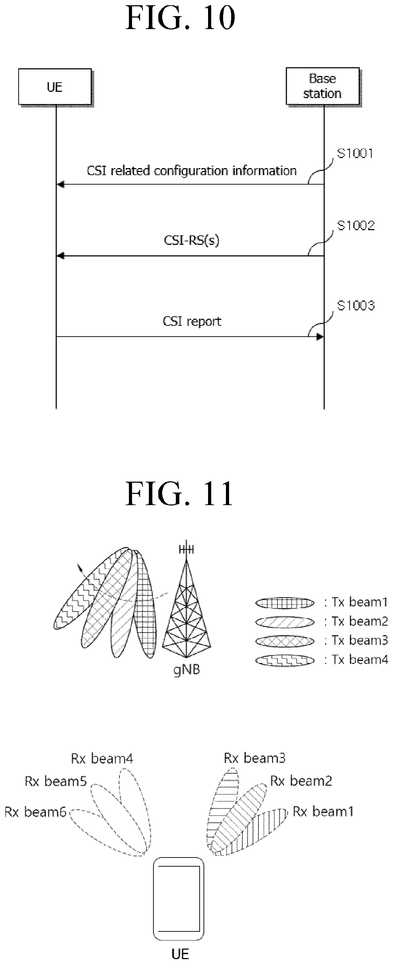

**FIG. 10** **illustrates channel state information (CSI) related procedure.**

In the 5G NR, the CSI-RS is used for time/frequency tracking), CSI calculation, layer 1 (L1)- reference signal received power (RSRP) and L1- signal to interference and noise ratio (SINR) computation, and mobility. Here, the CSI calculation may be related to CSI acquisition, and L1-RSRP and L1-SINR computation may be related to beam management (BM).

Referring to FIG. 10, to perform at least one of the foregoing uses of the CSI-RS, the UE receives the CSI-related configuration information from the base station through radio resource control (RRC) signaling (S1001).

The CSI-related configuration information may include at least one of CSI- interference management (IM) resource-related information, CSI measurement configuration-related information, CSI resource configuration-related information, CSI-RS resource-related information, and CSI report configuration-related information.

When receiving at least one CSI-RS (i.e., one CSI-RS or multiple CSI-RSs) from the base station (S1002), the UE performs the CSI calculation based on the CSI-related configuration information to acquire the CSI, and then performs CSI feedback, i.e., transmits a CSI report to the base station (S1003).

### <Disclosure>

In the 3GPP NR, beam resources are usually provided to the UE in a transparent form. The base station provided the UE with the location of the resource region of the SSB or CSI-RS composed of a specific type of beam, and the base station identified the relative quality of that beam for the UE based on the CSI information or the like fed backed from the UE, and performed a beam configuration for a specific UE based on the identified quality. This was generally configured/managed in the forms of common beam sweeping performed changing an SSB index and dedicated beam sweeping performed through the CSI-RS.

Meanwhile, in the NR Release 18, various studies were conducted to reduce network power, and it was agreed to proceed with specific standardization based on the goals shown in the following Table 5.

**[Table 5]**

| |
|---|
| 1. Specify SSB-less SCell operation for inter-band CA for FR1 and co-located cells, if found feasible by RAN4 study, where a UE measures SSB transmitted on PCell or another SCell for an SCell's time/frequency synchronization (including downlink AGC), and L1/L3 measurements, including potential enhancement on SCell activation procedures if necessary [RAN4, RAN2] |
| 2. Specify enhancement on cell DTX/DRX mechanism including the alignment of cell DTX/DRX and UE DRX in RRC_CONNECTED mode, and inter-node information exchange on cell DTX/DRX [RAN2, RAN1, RAN3] |
| Note: No change for SSB transmission due to cell DTX/DRX. |
| Note: The impact to IDLE/INACTIVE UEs due to the above enhancement should be avoided. |
| 3. Specify the following techniques in spatial and power domains |
| Specify necessary enhancements on CSI and beam management related procedures including measurement and report, and signaling to enable efficient adaptation of spatial elements (e.g. antenna ports, active transceiver chains) [RAN1, RAN2] |
| Specify necessary enhancements on CSI related procedures including measurement and report, and signaling to enable efficient adaptation of power offset values between PDSCH and CSI-RS [RAN1, RAN2] |
| Note: Above objectives are only for UE specific channels/signals |
| Note: Legacy UE CSI/CSI-RS capabilities applies when considering total number of CSI reports and requirements |
| 4. Specify mechanism(s) to prevent legacy UEs camping on cells adopting the Rel-18 NES techniques, if necessary [RAN2] |
| 5. Specify CHO procedure enhancement(s) in case source/target cell is in NES mode [RAN2] |
| 6. Specify inter-node beam activation and enhancements on restricting paging in a limited area [RAN3]. |
| 7. Specify the corresponding RRM/RF core requirements, if necessary, for the above features [RAN4] |

Regarding the transmission power control in FIG. 5, it was agreed to standardize the procedures related to the CSI-RS and the beam management, and minimize the impact of these changes on the existing legacy UE.

The UE beam management using the existing CSI-RS generally includes selecting a beam, transmitting the CSI-RS through that beam, performing UE feedback on that CSI-RS, and determining a beam based on that feedback and then performing transmission in the form corresponding to the determined beam. However, in this procedure, the UE assumes only the same beam as in the existing CSI-RS, and is not notified of power change for power reduction. In other words, when there is a change in transmission power for a specific beam in a transmission environment using that beam, the UE is not informed of the change under the current standards, and does not perform a successful quality assumption about a reception signal.

The disclosure is to provide a method for the UE to successfully receive information about a beam, of which the transmission power changes, in an NR transceiving environment, and obtain power change of a signal transmitted at a specific point in time based on the received information. In particular, the disclosure is to provide a method of operating a plurality of beams, of which the transmission power changes, in the SSB or CSI-RS and configuring and/or managing correlation information for those beams.

**FIG. 11** **illustrates a transmission power management scheme based on beams according to the disclosure.**

Referring to FIG. 11, a UE may receive SSBs and/or CSI-RSs from a base station (gNB) by sweeping a plurality of reception beams (RX beam1 to Rx beam6). Here, the beam sweeping may refer to that the base station and the UE sequentially or randomly sweep directional beams each having a predetermined pattern. As another example, the plurality of reception beams swept by the UE may include reception beams (RX beam1 to Rx beam3) corresponding to specific directionality.

The base station (gNB) may transmit SSBs and/or CSI-RSs to the UE multiple times by sweeping a plurality of transmission beams (e.g., Tx beam1 to Tx beam4). The UE may measure the SSBs and/or CSI-RSs respectively received through the plurality of reception beams. Specifically, the UE may calculate downlink channel states based on the received SSBs and/or CSI-RSs, and determine a reception beam corresponding to the best state among the downlink channel states.

Below, the transmission power management scheme using the beam will be provided according to the disclosure.

The transmission power management scheme using the beam may be classified into (A) a transmission power management scheme using an SSB beam, and (B) a transmission power management scheme using a CSI-RS beam.

Meanwhile, according to the disclosure, there is further provided (C) a power-controlled beam configuration scheme using a transmission configuration indicator (TCI).

Below, each scheme will be described.

### A. Transmission power management scheme using SSB beam

In this scheme, the beam used in the SSB is employed to perform transmission power control. In general, 4 to 8 SSB indices may be operated in FR1 according to subcarrier spacing within one cycle where the UE performs scanning, and up to 64 SSB indices may be operated as used for different beams in FR2. In this case, a few beams may be operated in the form of quasi co-location (QCL) by changing only the transmission power. For example, four beams different only in the transmission power may be substantially operated in an omni-beam form. In these operating situations, the following specific schemes may be used to enable the UE to obtain accurate transmission power information of actual transmission blocks.

### A-1. Scheme of providing beam correlation information between SSB indices

This scheme provides correlation information between beam indices through an additional radio resource control (RRC) message additionally or independently when transmitting information related to an SSB beam index. For example, the base station may transmit quasi co-located (QCLed) beam groups and transmission power differences. This may be transmitted explicitly in the form of a QCLed index and a transmission power difference for each index, or implicitly in the form of a sequence. For example, When the same QCL group {1, 3, 5, 7} is configured, it may be determined that each index has a transmission power of, for example, -3dB relative to the previous index. This transmission power difference may be varied depending on the number of members in the group.

### A-2. Scheme of transmitting upper/lower beam information

This scheme provides upper/lower beam information related to the beam index referenced by the UE to the UE that performs a random access based on a specific SSB index. For example, when the SSB with an index of 3 is referenced by the UE, the base station may provide the SSB index QCLed with that index, and information about difference in power from the referenced index. In this case, only information about the indices having lower or higher transmission power than the referenced index may be transmitted, in which the transmission power difference may be defined in the standards or transmitted implicitly in the form of the number of indices or the like.

### B. Transmission power management scheme using CSI-RS beam

In this scheme, the beam used in the CSI-RS is employed to perform transmission power control. To this end, correlation between multiple CSI-RSs may be transmitted in advance like that in the SSB of the scheme A. Unlike the SSB, the CSI-RS is managed for each resource in the form of identity (ID), in which the correlation with other CSI-RSs different in ID may be provided in advance. For example, the configuration ID of the CSI-RS QCLed with the currently configured CSI-RS and the transmission power difference from that CSI-RS may be additionally configured and/or provided. This may be applied to all RSs in the configuration information, exclude the SSB, and be applied only to the CSI-RS corresponding to a specific list location in a CSI-RS list or corresponding to the resource correlation. For example, power difference may not be applied when the time/frequency location is the same with the previous CSI-RS. Alternatively, correlation information about each resource in the list within one CSI-RS resource configuration may be provided. For example, a QCL relationship or a transmission power offset value may be configured additionally for each CSI-RS in the list.

### C. Power-controlled beam configuration scheme using transmission configuration indicator (TCI)

The base station uses a TCI field in downlink control information (DCI) to notify a UE that transmission is performed in the form of QCL with a specific CSI-RS after obtaining beam quality information through the CSI-RS. This field may be used to inform the UE of the power change in the corresponding transmission.

### C-1. TCI configuration scheme based on power correlation

This scheme configures a TCI state by adding transmission power change to a QCL relationship with the referenced CSI-RS or SSB when configuring a TCI state value in the TCI-State, etc. For example, there may be multiple TCI ID values QCLed with a specific CSI-RS, which are different in a transmission power value for each TCI. Alternatively, mapping may be performed in the form of changing the transmission power by changing only specific position bits, and the mapping may also be defined in advance. For example, it may be configured that only 16 or 32 IDs may be configured when the TCI ID is configured in a control resource set (CORESET), and 1/2 of the most significant bit, which are not 0, is understood as QCLed with each ID corresponding to the most significant bit and changed in only the transmission power.

### C-2. Scheme of applying additional TCI field to transmit power correlation

This scheme uses a field for additionally transmitting power change when transmitting the DCI including the TCI field. In this case, a power offset value predefined in the form of a table may be used, or the predefined power offset value may be used/ignored when the TCI is configured.

The forementioned schemes A, B and C may be combined with each other.

The schemes provided in the disclosure may be applied independently or may be operated as combined in any form. Further, regarding the terms used in the disclosure, new terms are arbitrarily named to make their meaning easier to understand, and the disclosure may be applied even though other terms having actually the same meanings are used.

### <Summary of Embodiments>

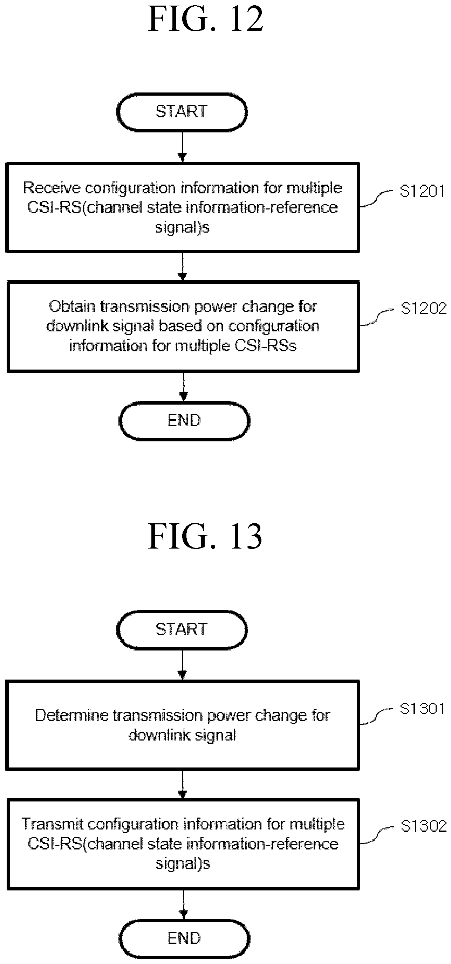

**FIG. 12** **illustrates an operation method of a UE according to an embodiment of the disclosure.**

Referring to FIG. 12, the UE receives configuration information for a plurality of channel state information-reference signals (CSI-RS) from the base station (S1201). Then, the UE obtains transmission power change for a downlink signal based on the configuration information for the plurality of CSI-RSs received from the base station (S1202). Here, the transmission power offset may be configured for each of the multiple CSI-RSs.

Meanwhile, the configuration information for the plurality of CSI-RSs may be single CSI-RS resource configuration information, and a quasi co-location (QCL) relationship may be configured for each of the plurality of CSI-RSs. Here, each of the plurality of CSI-RSs may correspond to an identity (ID) associated with a CSI-RS resource, and the transmission power offset may be configured based on the ID.

The foregoing transmission power offset may be an offset related to a physical downlink shared channel (PDSCH), i.e., a CSI-RS transmission power offset for the PDSCH.

Meanwhile, the UE may receive at least one CSI-RS from the base station, and perform CSI feedback based on the at least one received CSI-RS.

**FIG. 13** **illustrates an operation method of a base station according to an embodiment of the disclosure.**

Referring to FIG. 13, the base station determines transmission power change for a downlink signal (S1301). Further, the base station transmits configuration information for a plurality of CSI-RSs to the UE after determining the transmission power change (S1202). Here, the transmission power offset may be configured for each of the plurality of CSI-RSs.

Meanwhile, the configuration information for the plurality of CSI-RSs may be single CSI-RS resource configuration information, and a quasi co-location (QCL) relationship may be configured for each of the plurality of CSI-RSs. Here, each of the plurality of CSI-RSs may correspond to an identity (ID) associated with a CSI-RS resource, and the transmission power offset may be configured based on the ID.

The foregoing transmission power offset may be an offset related to a physical downlink shared channel (PDSCH), i.e., a CSI-RS transmission power offset for the PDSCH.

Meanwhile, the base station may transmit at least one CSI-RS to the UE, and then receive CSI feedback from the UE.

By the foregoing operation method of the UE and/or the base station, the base station configures a correlation between a CSI-RS and the corresponding ID, so that the UE can indirectly obtain channel state information (CSI) from other correlated CSI-RSs even though a specific CSI-RS is not actually received. For example, the UE may perform feedback on the CSI-RS not transmitted from the base station, or perform PDSCH reception by obtaining TCL information. Therefore, the UE may be notified that the transmission power is controlled even though the base station does not transmit the CSI-RS of which the transmission power is reduced.

### <Apparatuses to which the Disclosure is applicable>

The disclosure described up to now may be implemented through various means. For example, the disclosure may be implemented by hardware, firmware, software, or a combination thereof. Details will be described with reference to the accompanying drawings.

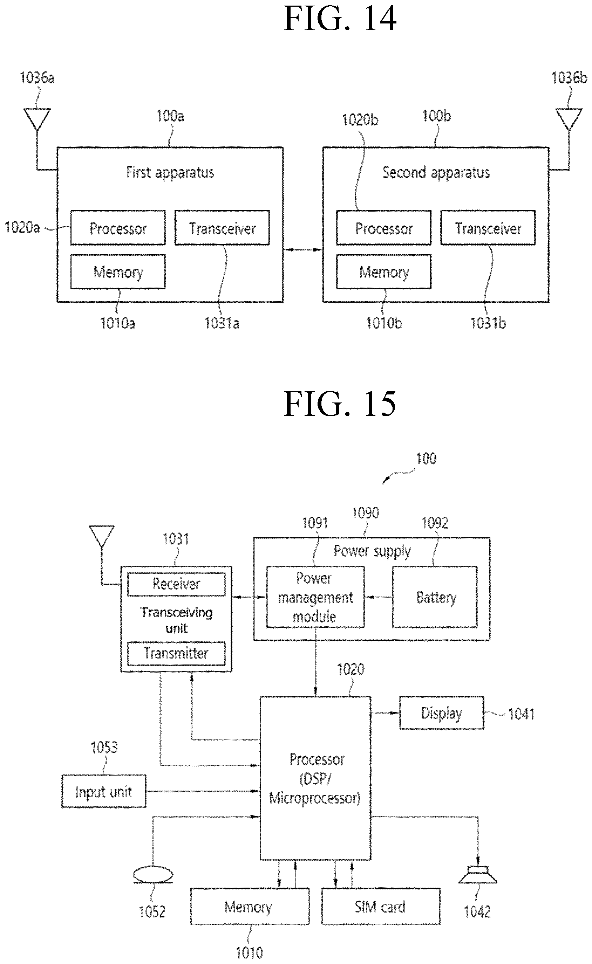

**FIG. 14** **shows apparatuses according to an embodiment of the disclosure.**

Referring to FIG. 14, a wireless communication system may include a first apparatus 100a and a second apparatus 100b.

The first apparatus 100a may include a base station, a network node, a transmission UE, a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission UE, a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may perform the foregoing functions, procedures, and/or methods. The processor 1020a may implement one or more protocols. For example, the processor 1020a may perform one or more layers of a radio interface protocol. The memory 1010a may be connected to the processor 1020a, and configured to various types of information and/or instructions. The transceiver 1031a may be connected to the processor 1020a, and controlled to transceive a radio signal.

The second apparatus 100b may include at least one processor such as a processor 1020b, at least one memory device such as a memory 1010b, and at least one transceiver such as a transceiver 1031b. The processor 1020b may perform the foregoing functions, procedures, and/or methods. The processor 1020b may implement one or more protocols. For example, the processor 1020b may implement one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b, and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 15** **is a block diagram showing a configuration of a UE according to an embodiment of the disclosure.**

In particular, FIG. 15 illustrates the foregoing apparatus of FIG. 14 in more detail.

The apparatus includes a memory 1010, a processor 1020, a transceiving unit 1031, a power management module 1091, a battery 1092, a display 1041, an input unit 1053, a loudspeaker 1042, a microphone 1052, a subscriber identification module (SIM) card, and one or more antennas.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 receives an input to be used by the processor 1020. The input unit 1053 may be displayed on the display 1041. The SIM card is an integrated circuit used to safely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. When the embodiment is implemented in software, the techniques described in the present disclosure may be implemented in a module (e.g., process, function, etc.) for performing the function described in the present disclosure. A module may be stored in the memory 1010 and executed by the processor 1020. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020 in a way to operate and transmits and/or receives a radio signal. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives a sound related input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

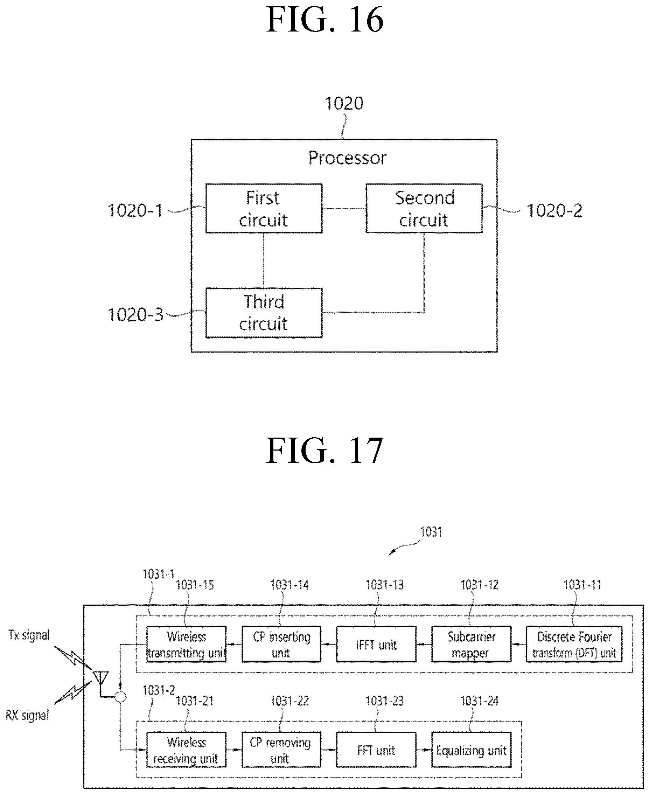

**FIG. 16** **is a configuration block diagram of a processor in which the disclosure is implemented.**

As can be seen with reference to FIG. 16, a processor 1020 in which the disclosure of the present specification is implemented may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP), and may include at least one of a digital signal processor (DSP), a central processing unit (CPU), and a graphics processing unit (GPU).

**FIG. 17** **is a detailed block diagram of a transceiver of a first apparatus shown in** **FIG. 14** **or a transceiving unit of an apparatus shown in** **FIG. 15****.**

Referring to FIG. 17, the transceiving unit 1031 includes a transmitter 1031-1 and a receiver 1031-2. The transmitter 1031-1 includes a discrete Fourier transform (DFT) unit 1031-11, a subcarrier mapper 1031-12, an IFFT unit 1031-13, a cyclic prefix (CP) insertion unit 1031-14, and a wireless transmitting unit 1031-15. The transmitter 1031-1 may further include a modulator. Further, the transmitter 1031-1 may for example include a scramble unit (not shown), a modulation mapper (not shown), a layer mapper (not shown), and a layer permutator (not shown), which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents intersymbol interference (ISI) and inter-carrier interference (ICI), thereby maintaining orthogonality even in a multipath channel.

On the other hand, the receiver 1031-2 includes a wireless receiving unit 1031-21, a CP removing unit 1031-22, an FFT unit 1031-23, and an equalizing unit 1031-24. The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the disclosure, when network power reduction technology is applied to a wireless communication system, the UE may track a successful transmission power change and efficiently decode a downlink signal based on the transmission power change.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method of operating a user equipment (UE) in a wireless communication system, the method comprising:
receiving configuration information for a plurality of channel state information-reference signals (CSI-RS); and
obtaining a transmission power change for a downlink signal, based on the configuration information for the plurality of CSI-RSs,
wherein a transmission power offset is configured for each of the plurality of CSI-RSs.

2. The method of claim 1, wherein the configuration information for the plurality of CSI-RSs is single CSI-RS resource configuration information.

3. The method of claim 1 or 2, wherein a quasi co-location (QCL) relationship is configured for each of the plurality of CSI-RSs.

4. The method of any one of claims 1 to 3, wherein each of the plurality of CSI-RSs corresponds to an identity (ID) associated with a CSI-RS resource, and the transmission power offset is configured based on the ID.

5. The method of any one of claims 1 to 4, further comprising:
receiving at least one CSI-RS; and
performing CSI feedback based on the at least one received CSI-RS.

6. The method of any one of claims 1 to 5, wherein the configuration information for the plurality of CSI-RSs is received through a radio resource control (RRC) message.

7. A method of operating a base station in a wireless communication system, the method comprising:
determining a transmission power change for a downlink signal; and
transmitting configuration information for a plurality of channel state information-reference signals (CSI-RS) after determining the transmission power change,
wherein a transmission power offset is configured for each of the plurality of CSI-RSs.

8. The method of claim 7, wherein the configuration information for the plurality of CSI-RSs is single CSI-RS resource configuration information.

9. The method of claim 7 or 8, wherein a quasi co-location (QCL) relationship is configured for each of the plurality of CSI-RSs.

10. The method of any one of claims 7 to 9, wherein each of the plurality of CSI-RSs corresponds to an identity (ID) associated with a CSI-RS resource, and the transmission power offset is configured based on the ID.

11. The method of any one of claims 7 to 10, further comprising:
transmitting at least one CSI-RS; and
receiving CSI feedback after transmitting the at least one CSI-RS.

12. The method of any one of claims 7 to 11, wherein the configuration information for the plurality of CSI-RSs is transmitted through a radio resource control (RRC) message.

13. A communication apparatus in a wireless communication system, the apparatus comprising:
at least one processor; and
at least one memory configured to store instructions and be operably electrically connectable to the at least one processor, wherein an operation performed based on the instruction executed by the at least one processor comprises:
receiving configuration information for a plurality of channel state information-reference signals (CSI-RS); and
obtaining a transmission power change for a downlink signal, based on the configuration information for the plurality of CSI-RSs,
wherein a transmission power offset is configured for each of the plurality of CSI-RSs.

14. The apparatus of claim 13, wherein the configuration information for the plurality of CSI-RSs is single CSI-RS resource configuration information.

15. The apparatus of claim 13 or 14, wherein a quasi co-location (QCL) relationship is configured for each of the plurality of CSI-RSs.
